# EUROPEAN PATENT APPLICATION

(11) **EP 4 693 107 A2**
(43) Date of publication of application: **11.02.2026**
(21) Application number: 25193097.0
(22) Date of filing: 31.07.2025
(51) Int. Cl.: G06N 3/063, G06N 3/0455

(54) **SYSTEMS AND METHODS FOR PROCESSING REQUESTS FOR A MACHINE LEARNING MODEL**

(30) Priority: 05.08.2024 US 202463679507 P; 30.05.2025 US 202519224245
(71) Applicant: Samsung Electronics Co., Ltd., Suwon-si, Gyeonggi-do 16677 (KR)
(72) Inventor: GONG, Yu, San Jose, CA, 95134 (US); CHANG, Andrew, San Jose, CA, 95134 (US); HUEN, Hingkwan, San Jose, CA, 95134 (US)
(74) Representative: Kuhnen & Wacker Patent- und Rechtsanwaltsbüro PartG mbB

(57) **Abstract**

A system comprising: a processing circuit; and a memory storing instructions, which, based on being executed by the processing circuit, cause the processing circuit to perform: identifying a first computation performed by a machine learning model; scheduling a first memory access task associated with a first portion of a first data with respect to the first computation; identifying a second computation performed by the machine learning model, wherein the second computation and the first computation are separate computations; and scheduling a second memory access task associated with a second portion of the first data with respect to the second computation, wherein the first portion and the second portion are different portions of the first data.

## Description

### FIELD

One or more aspects of embodiments according to the present disclosure relate to machine learning, and more particularly to systems and methods for processing requests for a machine learning model.

### BACKGROUND

The use of artificial intelligence (AI) has increased dramatically over the last few years. AI has become commonly used in domains such as image classification, speech recognition, media analytics, heath care, autonomous machines, smart assistants, and the like. Using AI often necessitates the use of large datasets and advanced algorithms and that similarly necessitate efficient and cost-effective data processing solutions.

The above information disclosed in this Background section is only for enhancement of understanding of the background of the present disclosure, and therefore, it may contain information that does not form prior art.

### SUMMARY

One or more embodiments of the present disclosure are directed to a method comprising: receiving one or more input tokens associated with a one or more first requests to a machine learning model; receiving one or more output tokens associated with one or more second requests to the machine learning model; associating a first portion of the one or more input tokens and a first portion of the one or more output tokens with a first group; associating a second portion of the one or more input tokens and a second portion of the one or more output tokens with a second group; and processing, by the machine learning model, the first group and the second group for generating an inference.

In some embodiments, the one or more input tokens comprise a set of tokens associated with a first request of the one or more first requests and a set of tokens associated with a second request of the one or more first requests, and wherein the first portion of the one or more input tokens comprises the set of tokens associated with the first request.

In some embodiments, the first portion of the one or more input tokens further comprises the set of tokens associated with the second request.

In some embodiments, the one or more input tokens comprises a first set of tokens associated with a first request of the one or more first requests and a second set of tokens associated with a second request of the one or more first requests, and wherein the first portion of the one or more input tokens includes a first portion of the first set of tokens and the second portion of the one or more input tokens includes a second portion of the first set of tokens.

In some embodiments, the first portion of the one or more input tokens includes a first portion of the second set of tokens and the second portion of the one or more input tokens includes a second portion of the second set of tokens.

In some embodiments, the first portion of the one or more output tokens includes a first set of tokens associated with a first request of the one or more second requests, and the second portion of the one or more output tokens includes a second set of tokens associated with a second request of the one or more second requests.

In some embodiments, the one or more first requests include one or more first input queries and the one or more second requests include one or more second input queries.

In some embodiments, the one or more input tokens are generated based on processing the one or more first input queries, and the output tokens are generated based on executing a neural network to make a prediction based on the one or more second input queries.

One or more embodiments of the present disclosure are directed to a method comprising: identifying a first computation performed by a machine learning model; scheduling a first memory access task associated with a first portion of a first data with respect to the first computation; identifying a second computation performed by the machine learning model, wherein the second computation and the first computation are separate computations; and scheduling a second memory access task associated with a second portion of the first data with respect to the second computation, wherein the first portion and the second portion are different portions of the first data.

In some embodiments, the method further comprises performing the first computation and the first memory access task according to a schedule; and performing the second computation and the second memory access task according to the schedule.

In some embodiments, first computation is associated with a first group of tokens and a first layer of the machine learning model, wherein the second computation is associated with a second group of tokens and the first layer.

In some embodiments, the first data includes layer weight data associated with a second layer of the machine learning model.

In some embodiments, one or more computations of the machine learning model, including the first computation and the second computation, are associated with K number of groups of tokens, the method comprising: separating the layer weights data into K portions; and scheduling the K portions of the layer weights data with respect to the K groups of tokens.

In some embodiments, first computation is associated with a first group of tokens and a first layer of the machine learning model, wherein the second computation is associated with a second group of tokens and a second layer of the machine learning model.

In some embodiments, the first data includes key-value data associated with a third group of tokens.

In some embodiments, one or more computations of the machine learning model, including the first computation and the second computation, are associated with M number of layers of the machine learning model, the method comprising: separating the key-value data into M portions; and scheduling memory access tasks associated with the M portions with respect to the M layers.

In some embodiments, the first layer and the second layer are layers of a transformer layer of a large language model.

In some embodiments, the first layer is a self-attention layer of a large language model of the machine learning model, and the second layer is a feed forward neural-network layer of the large language model.

One or more embodiments of the present disclosure are directed to a system comprising: a processing circuit; and a memory storing instructions, which, based on being executed by the processing circuit, cause the processing circuit to perform: identifying a first computation performed by a machine learning model; scheduling a first memory access task associated with a first portion of a first data with respect to the first computation; identifying a second computation performed by the machine learning model, wherein the second computation and the first computation are separate computations; and scheduling a second memory access task associated with a second portion of the first data with respect to the second computation, wherein the first portion and the second portion are different portions of the first data.

In some embodiments, the instructions, based on being executed by the processing circuit, further cause the processing circuit to perform: performing the first computation and the first memory access task according to a schedule; and performing the second computation and the second memory access task according to the schedule.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
Fig. 1 depicts a block diagram of a system for executing a machine learning model, according to one or more embodiments.
Fig. 2 depicts a block diagram of a processing unit associated with the system of Fig. 1, according to one or more embodiments.
FIG. 3 depicts a block diagram of a system for processing requests for a machine learning model, according to one or more embodiments.
Fig. 4 depicts a conceptual diagram of a first technique for hybrid batching of prefilling and decoding sequences, according to one or more embodiments.
Fig. 5 depicts a conceptual diagram of how KV cache data associated with the hybrid batches of Fig. 4 are utilized by one or more layers of a machine learning model, according to one or more embodiments.
Fig. 6 depicts a flow diagram of a process for balancing computation and memory latency for a machine learning model, according to one or more embodiments.
Fig. 7 depicts a conceptual diagram of a second technique for hybrid batching of prefilling and decoding sequences, according to one or more embodiments.
Fig. 8 depicts a conceptual diagram of how KV cache data associated with the hybrid batches of Fig. 7 are utilized by one or more layers of a machine learning model, according to one or more embodiments.
Fig. 9 depicts a flow diagram of a process for processing requests for a machine learning model associated with decreasing latency, according to one or more embodiments.
Fig. 10 depicts a flow diagram of a general process for processing requests for a machine learning model, according to one or more embodiments.
FIG. 11 depicts a conceptual diagram of unbalanced computation and memory latency for self-attention and FFN layers, according to one or more embodiments.
FIG. 12 depicts a conceptual diagram of balanced computation and memory latency for self-attention and FFN layers, according to one or more embodiments.
Fig. 13 depicts a flow diagram of a process for processing requests for a machine learning model associated with increasing throughput, according to one or more embodiments.
Fig. 14 depicts a flow diagram of a process for balancing computation and memory latency associated with distributing memory access of layer weights across the batch dimension, according to one or more embodiments.
Fig. 15 depicts a flow diagram of a process for balancing computation and memory latency associated with distributing memory access of KV cache across the layer dimension, according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed (e.g., concurrently) such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

Large language model (LLM) inference refers to the process of using a pre-trained large language model to generate predictions or responses based on new input data (e.g., prompts, questions, instructions, etc.). During inference, the model may take tokenized input text, process it through multiple layers of computation, and produce an output (e.g., output text).

LLM inference may include a prefilling phase and a decoding phase. In the prefilling phase, a prompt sequence is used to generate a key-value data (referred to as a KV cache or KV cache data) for one or more transformer layers of the LLM. The decoding phase utilizes and updates the KV cache to generate tokens sequentially, in which a current token generation depends on previously generated tokens. Decoding sequences may be significantly shorter than prefilling sequences. As such, the decoding phase may have low processor utilization (e.g., low utilization of a graphics processing unit (GPU)) due to the sequential nature of the process and may result in limited parallelism. The low processor utilization may cause a bottleneck in the overall inference process.

One or more embodiments of the present disclosure provides systems, devices, and methods that aim to increase parallelism and processor utilization (e.g., GPU utilization) during machine learning processing (e.g., LLM inference) to improve overall throughput and/or latency of the inference process. Although various embodiments of the present disclosure are described with reference to an LLM, a person of skill in the art should recognize that embodiments of the present disclosure are not limited thereto and may extend to other machine learning models.

In some embodiments, a batching or grouping mechanism is employed where multiple batches or groups of tokens are processed (e.g., concurrently), in which one or more (e.g., each) batch includes decoding tokens associated with a first group of requests and prefilling tokens associated with a second group of requests. In some embodiments, a request includes one or more first input queries to the LLM such as a question or prompt. An input token may be generated based on processing an input query. An output token maybe generated based on executing a neural network of the LLM to make a prediction based on the input query. Hereinafter, a "hybrid batch" may refer to a batch of tokens that includes both decoding tokens and prefilling tokens, and "batch" may refer to a group of tokens that includes both decoding and prefilling tokens, only decoding tokens, or only prefilling tokens.

For example, a hybrid batch may include decoding tokens from requests 1-4 and prefilling tokens from requests 17-20. In some embodiments, the prefilling and decoding tokens from the same request are processed sequentially, with the decoding tokens being processed after the prefilling tokens, and the decoding tokens from a particular request are batched together with prefilling tokens of subsequent requests. One such hybrid batch may be processed (e.g., concurrently) with multiple other hybrid batches also having decoding tokens from some requests and prefilling tokens from some subsequent requests. Since prefilling sequences are typically longer than decoding sequences, the batching mechanism according to embodiments of the present disclosure allow the batches to be larger in size than if they were to only contain the decoding sequences. The increased batch size contributes to higher parallelism and GPU utilization.

The batching of decoding tokens and prefilling tokens into a single hybrid batch may be done in various ways. In some embodiments, a first hybrid batch may include the full prefilling sequence of one or more first requests (e.g., requests 17-20) and the full decoding sequence of one or more second (e.g., previous) requests (e.g., requests 1-4). A full prefilling sequence may include a complete or an entire set or sequence of tokens associated with the request.

A second hybrid batch that may be processed (e.g., concurrently) with the first batch may include the full prefilling sequence of one or more other requests (e.g., requests 21-24) and the full decoding sequence of one or more other previous requests (e.g., requests 5-8). The batching technique according to this embodiment may contribute to optimizing throughput in the inference process.

In some embodiments, a first batch may include a first portion (e.g., tokens 1-4) of the prefilling sequence of one or more first requests (e.g., requests 17-20) and the full decoding sequence of one or more second requests (e.g., requests 1-4). A second batch may be processed concurrently with the first batch and may include a second portion (e.g., tokens 5-8) of the prefiling sequences of the one or more first requests (e.g., requests 17-20) and the full decoding sequence of one or more third (e.g., other previous) requests (e.g., requests 5-8). The batching technique according to this embodiment may contribute to optimizing latency in the inference process. In some embodiments, the batching technique that is applied may be based on a criterion (e.g., an application that is run). For example, for an application that prioritizes rapid response to requests (e.g., a chatbot application), the above-described batching technique for optimizing latency may be utilized. In another example, for an application that processes a large amount of data in generating an output (e.g., database search), the above-described batching technique for optimizing throughput may be utilized.

In some embodiments, the batches of prefilling and/or decoding tokens may be processed through one or more layers of a machine learning model, such as a self-attention layer and a feed forward neural-network layer. In some embodiments, processing of the tokens includes computations as well as memory accesses such as loading and/or storing data utilized for the computations. The one or more layers may be associated with respective layer weights. The batches of tokens may be associated with respective key-value data, also referred to as a key-value (KV) cache. For example, the computations of a first batch of tokens at a first layer may utilize a first layer weight associated with the first layer and a first KV cache associated with the first batch of tokens. In some embodiments, the data (e.g., weights data, KV cache, etc.) utilized for a computation is loaded from memory prior to the computation, such as during a previous computation. Conventional approaches for scheduling computations and memory access may result in unbalanced computation and memory access latency. For example, some processing steps are computation-bound, in which there is more computation latency than memory access latency. Some steps may be memory-bound, in which there is more memory access latency than computation latency. Such unbalanced latency may result in excessive latency overall.

One or more embodiments of the present disclosure provides systems, devices, and methods for balancing computation and memory access latency, so that the overall processing of tokens through one or more layers of a machine learning model can be performed more efficiently. In some embodiments, one or more memory access tasks such as loading and/or storing data may be split or separated into one or more parts to be performed at least partially concurrently with one or more computation tasks. The splitting and the performing of the one or more memory access tasks at least partially concurrently with a computation task may be such that the difference between the latency of the computation task and the latency of the portions of the one or more memory access tasks may be reduced. Reducing the difference between computation latency and memory latency of a processing step may reduce the total amount of latency for processing the batches of tokens.

In an example, a first computation associated with a first layer of a machine learning model is performed on a first batch of tokens. A first portion of the layer weights of a second layer may be loaded during the first computation. A first portion of the KV cache data for a second batch of tokens may also be loaded during the first computation, either before or after the first portion of the layer weights is loaded. A second computation associated with the first layer of the machine learning model may be performed after the first computation. A second portion of the layer weights for the second layer may be loaded during the second computation. A first portion of the KV cache data for a third batch of tokens may also be loaded during the second computation, either before or after the second portion of the layer weights is loaded.

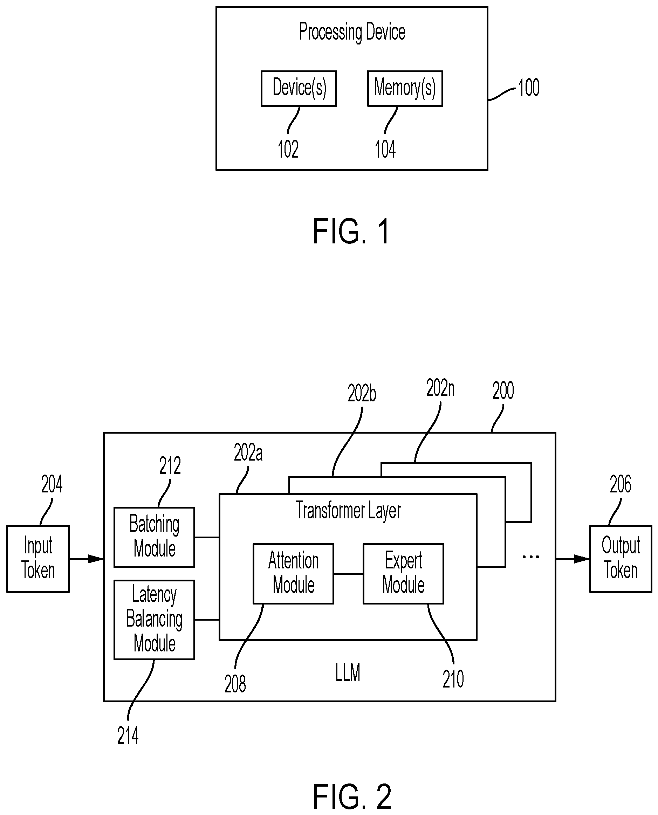

Fig. 1 depicts a block diagram of a processing device 100 for executing a machine learning model according to one or more embodiments. The processing device 100 may include one or more devices 102 and one or more memorys 104. In this regard, the one or more processors 102 may include circuitry such as one or more central processing units (CPUs), graphics processing units (GPUs), tensor processing units (TPUs), microcontrollers, digital signal processors (DSPs), application-specific integrated circuits (ASICs), field programmable gate arrays (FPGAs), hard-wired logic, and/or analog circuitry.

The one or more memory devices 104 may include one or more volatile and/or nonvolatile memory devices, such as, for example, a high-bandwidth memory (HBM), a dynamic random access memory (DRAM), a static random access memory (SRAM), a NAND flash memory, a low-power double data rate (LPDDR) memory, a compute express link (CXL) memory, and/or the like. In some embodiments, the one or more memory devices 108 may store instructions for allowing the processor 102 to execute a machine learning model. In some embodiments, the one or more memory devices 104 may store data utilized in executing the machine learning model, such as layer weights associated with one or more layers of the machine learning model and key-value (KV) data for tokens associated with one or more requests made to the machine learning model.

In some embodiments, components of the processing device 100, such as one or more processors 102 and one or more memory device 104 are communicable by data communications links 106. The data communication links 106 may include, for example, a compute express link (CXL) bus, peripheral component interconnect express (PCIe) bus, Ethernet, Universal Serial Bus (USB), and/or any wired or wireless data communication link or network.

Fig. 2 depicts a block diagram of an LLM executed by the one or more processors 102, such as a GPU, according to one or more embodiments of the present disclosure. The LLM includes one or more (e.g., N) neural network layers 202a-202n (collectively referenced as 202) implemented, for example, as transformer (e.g., transformer architecture) layers. The neural network layers 202 may be configured to take an input token 204 (also referred to as a prefilling token) and process and transform the input token 204 to generate an output token 206 (also referred to as a decoding token). For example, the input token 204 may be a word or a phrase, and the output token 206 may be a next word or phrase in a sequence that is predicted by the LLM based on the input token 204.

The layers 202 may be sequentially invoked to generate the output token 206. For example, a first layer 202a may process the input token 204 to generate a first output. The first output may be an input to a second layer 202b which may generate a second output based on the input. The other layers of the LLM 200 may be sequentially invoked until the output token 206 is generated.

In some embodiments, a neural network layer 202 includes an attention module 208 and an expert module 210. The attention module 208 may include a self-attention layer configured to execute a "self-attention" mechanism to analyze relationships between tokens, including the input token, to understand context by weighing the importance of each token relative to others, regardless of their position in the sequence. The expert module 210 may include an FFN layer configured to use the contextual information generated by the attention module 208 to transform the input data further to capture more complex relationships in the data. In some embodiments, the expert module 210 may invoke one or more experts or specialized machine learning models to refine the representation of the input data.

In some embodiments, the LLM 200 further includes a batching module 212 and a latency balancing module 214. The various modules 208, 210, 212, 214 may be implemented via hardware, firmware (e.g., via an ASIC) and/or by a more general purpose hardware, such as a central processing unit (CPU) configured to execute instructions stored in a non-transitory storage medium (e.g., the memory 104). Also, although the one or more modules of the attention module 208, the expert module 210, the batching module 212, and the latency balancing module 214 are assumed to be separate functional units, a person of skill in the art will recognize that the functionality of the modules may be combined or integrated into a single module, or further subdivided into further sub-modules without departing from the spirit and scope of the inventive concept.

In some embodiments, the batching module 212 may generate a hybrid batch of prefilling tokens and decoding tokens to be processed (e.g., concurrently) by the LLM 200 with one or more other hybrid batches. For example, the hybrid batch may include decoding tokens from requests 1-4 and prefilling tokens from requests 17-20. In some embodiments, the prefilling and decoding tokens from the same request are processed sequentially, with the decoding tokens being processed after the prefilling tokens, and the decoding tokens from a particular request may be batched together with prefilling tokens of one or more subsequent requests. One such hybrid batch may be processed (e.g., concurrently) with one or more other hybrid batches also having decoding tokens from some requests and prefilling tokens from some subsequent requests. Since prefilling sequences are typically longer than decoding sequences, the batching mechanism according to embodiments of the present disclosure allow the batches to be larger in size than if they were to only contain the decoding sequences. The increased batch size contributes to higher parallelism and processor (e.g., GPU) utilization.

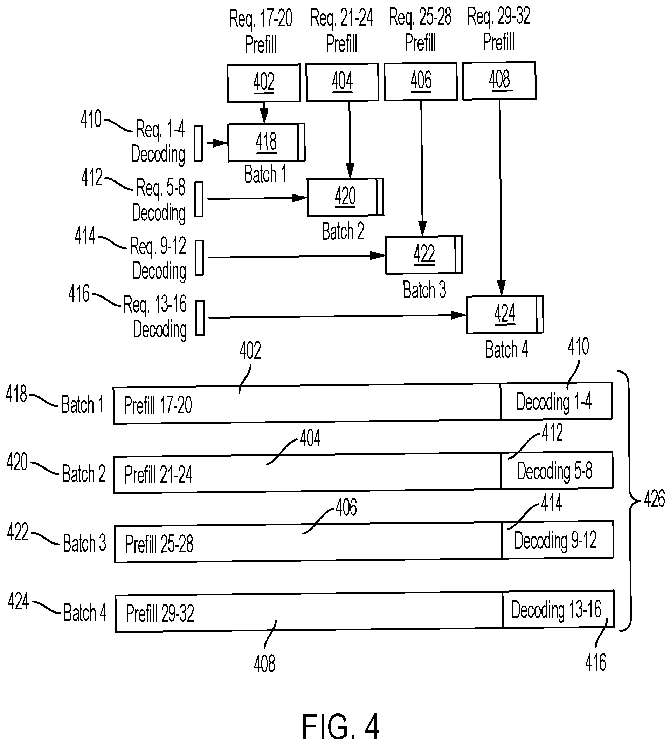

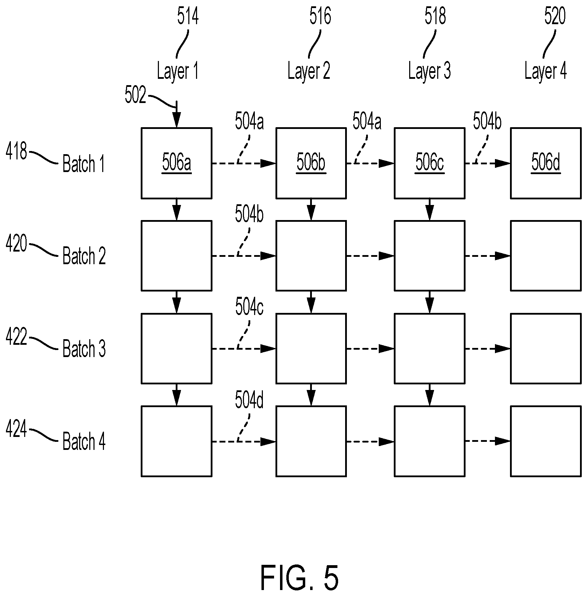

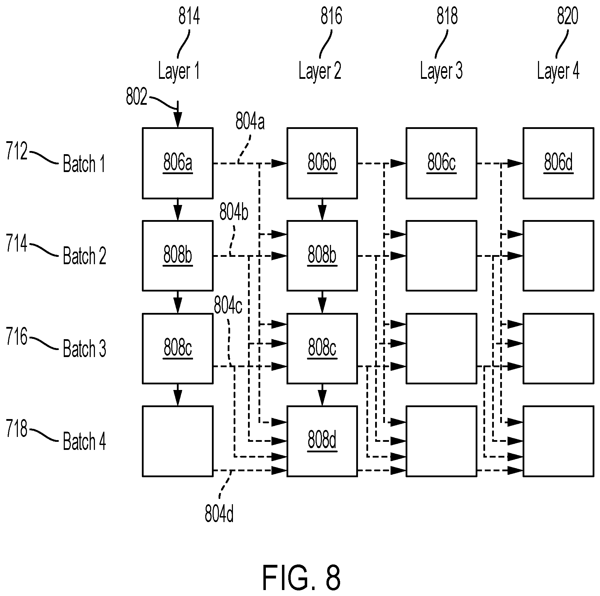

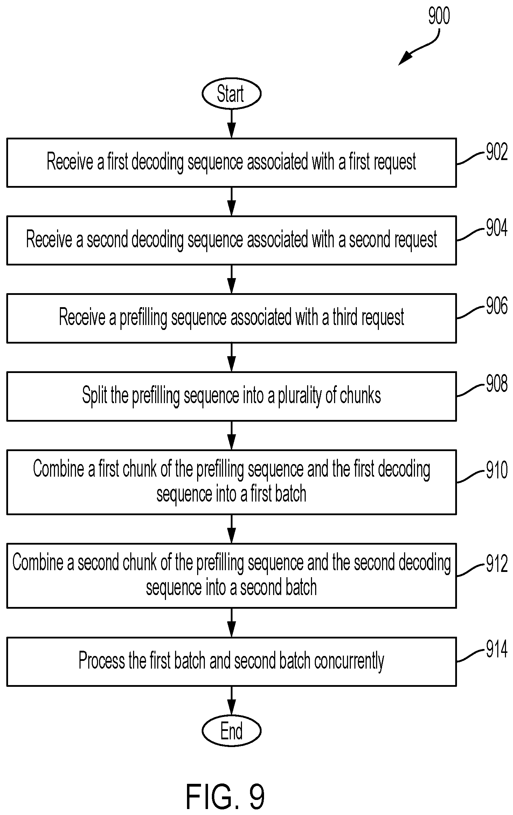

The batching of decoding tokens and prefilling tokens into a single hybrid batch may be done according to various techniques of the present disclosure. For example, the batching module 212 may be operable in a throughput-prioritizing hybrid batching mode, further described with reference to Figs. 4 and 8. The batching module 212 may also be operable in a latency-prioritizing hybrid batching mode, further described with reference to Figs. 5 and 9. In some embodiments, the batching module 212 may be switchable between the throughput-prioritizing hybrid batching mode and the latency-prioritizing hybrid batching mode based on one or more criteria, such as properties of the application that is run by the processing device 100. In some embodiments, the hybrid batching mode may be preselected. In some embodiments, the batching module 212 may automatically select between the hybrid matching modes based on detected characteristics of the data such as size, rate of incoming requests, optimization parameters, among others. In some embodiments, the batching module 212 may dynamically switch between modes based on current usage, traffic, bandwidth, among other conditions.

The latency balancing module 214 may be configured to split or separate memory access tasks, such as data load or store tasks, into one or more portions or sub-tasks to be performed at least partially concurrently with one or more computation tasks. In this regard, the latency associated with the memory access task may also be split and distributed across the one or more computation tasks where the access latency can at least be partially hidden by (e.g., occur concurrently with) the latency of the computation tasks.

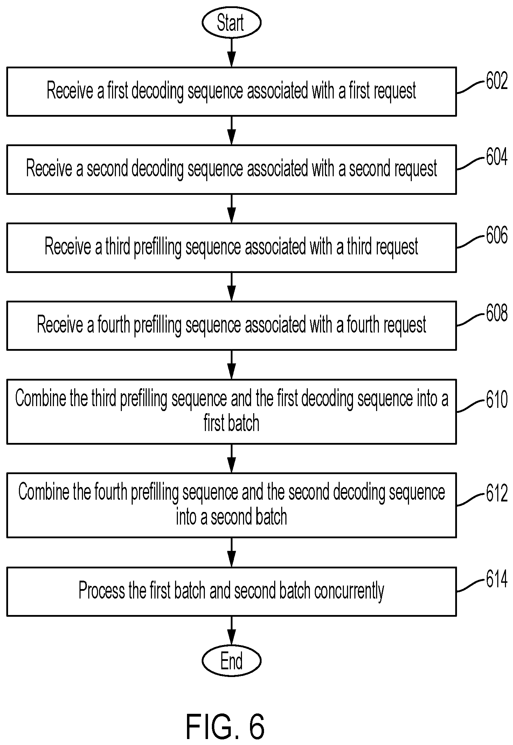

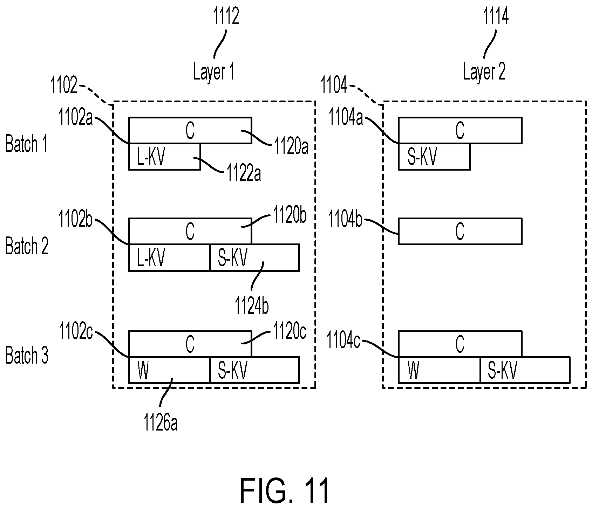

In some embodiments, a neural network layer 202 is associated with layer weights which are utilized for computations associated with the neural network layer 202. In some embodiments, a batch of tokens to be processed by the LLM 200 are associated with key-value (KV) cache data that are utilized when a computation is performed on the batch of tokens. In some embodiments, the latency balancing module 214 may split the loading of layer weight data for a neural network layer 202 into one or more portions and associate the portions across computations associated with different batches of tokens, as further described with reference to Figs. 6 and 11. In this regard, instead of loading the weight data for a neural network layer 202 in a single operation (e.g., with a single load instruction), a first portion of the layer weight data may be loaded at one point in time based on a first instruction, and a second portion of the layer weight data may be loaded at a second point in time based on a second instruction.

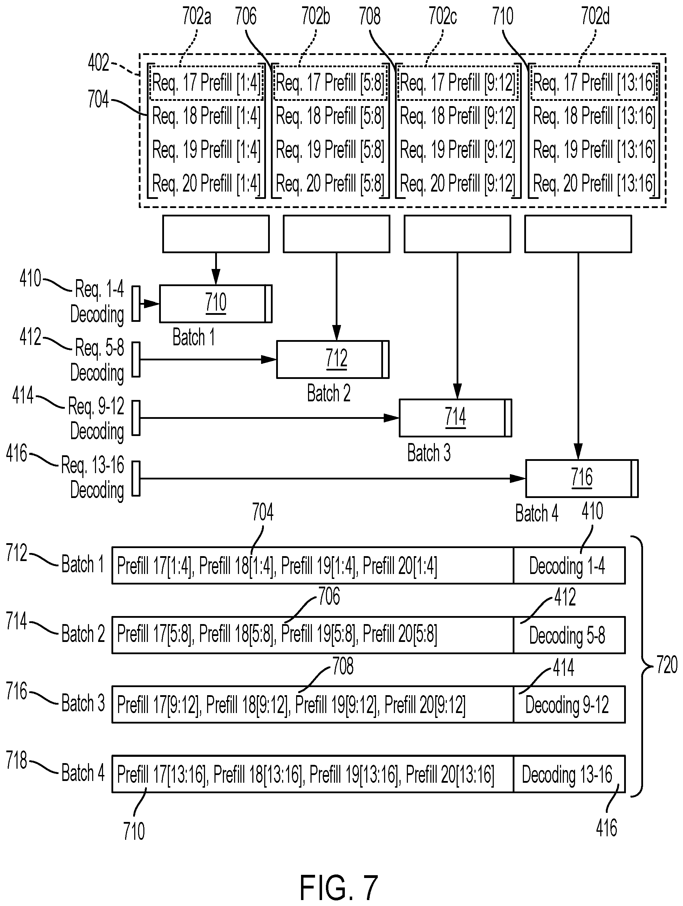

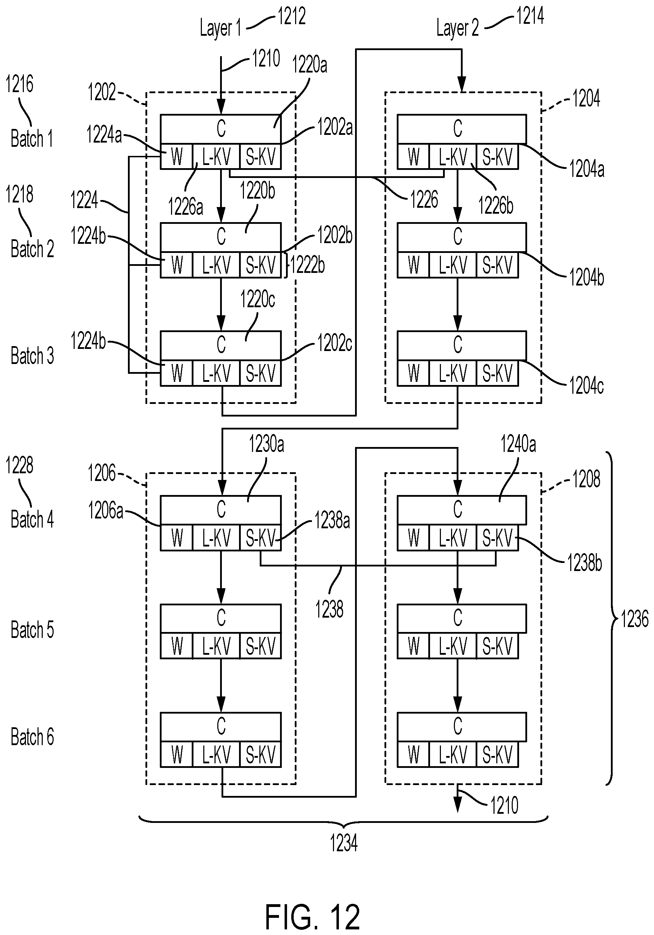

In some embodiments, the latency balancing module 214 may split the loading or storing of KV cache data for a batch of tokens into one or more portions and associate the portions across computations associated with different neural network layers 202, as further described with reference to Figs. 7 and 12. In this regard, instead of loading or storing the KV cache data for a batch of tokens in a single operation (e.g., with a single load or store instruction), a first portion of the KV cache data may be loaded or stored at one point in time based on a first instruction, and a second portion of the KV cache data may be loaded or stored at a second point in time based on a second instruction.

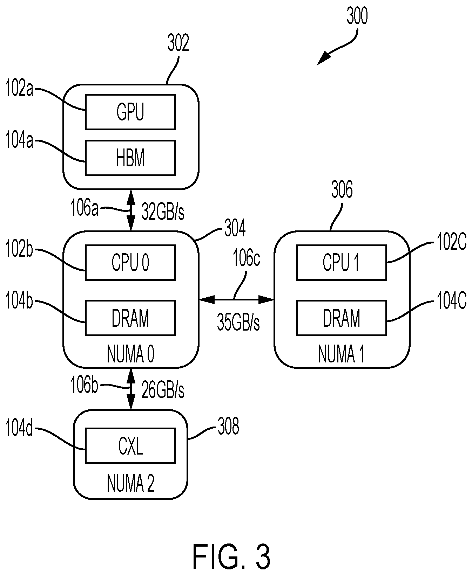

FIG. 3 depicts a block diagram of a system 300 for executing a machine learning model (e.g., the LLM 200), according to one or more embodiments. The system includes a GPU module 302, a first CPU module 304, a second CPU module 306, and a memory expansion module 308, which may be communicatively coupled via one or more data communication links 106a, 106b, 106c (collectively referenced as 106). The processors in the GPU and CPU modules 302-306 may be similar to the one or more processors 102 of FIG. 1. The memory expansion module 308 and memory devices 104a-104d in the GPU and CPU modules 302-306 may be similar to the memory devices 104 of FIG. 1.

The GPU module 302 may include a GPU 102a coupled to a first memory device 104a such as a high bandwidth memory (HBM) device. The first CPU module 304 may include a first CPU 102b coupled to a second memory device 104b such as, for example, a dynamic random access memory (DRAM), static random access memory (SRAM), and/or the like. In some embodiments, the memory device 104b may include a DRAM referred to as a local DRAM. The second CPU module 306 may include a second CPU 102c coupled to a third memory device 104c such as, for example, a DRAM, SRAM, and/or the like. In some embodiments, the third memory device 104c may include a DRAM referred to as a remote DRAM. In some embodiments, the memory expansion module 308 may include a fourth memory device 104d such as, for example, a CXL memory, NAND flash memory, low-power double data rate (LPDDR) memory, or other type of suitable memory device.

In some embodiments, the second memory device 104b, third memory device 104c, and fourth memory device operate under a non-uniform memory architecture (NUMA) memory model and participate in a tiered memory subsystem. In this regard, the first CPU module 304 may be referred to as a first NUMA node ("NUMA 0"). The second CPU module 306 may be referred to as a second NUMA node ("NUMA 1"). The memory expansion module 308 may be referred to as a third NUMA node ("NUMA 2"). By including the third NUMA node in addition to the first and second NUMA nodes, memory capacity of the system 300 may be expanded at a lower cost than, for example, adding another CPU module.

In some embodiments, the layers weights associated with one or more neural network layers 202 of a machine learning model (e.g., LLM) and/or the KV cache data associated with tokens to be processed in upcoming computations are offloaded from the GPU 102a to one or more of the CPU-side memory devices, such as the local DRAM 104b, the remote DRAM 104c, and/or the CXL memory device 104d. For example, the layer weights for a first neural network layer 202a may be stored in the HBM device 104a for use by the GPU 102a, and layer weights for a second neural network layer 202b and layer weights for a third neural network layer may be stored in the CPU-side memory devices 104b, 104c, 104d. In some embodiments, the layer weights for the second and third neural network layers may be split into one or more portions and distributed across the CPU-side memory devices 104b, 104c, 104d.

In some embodiments, KV cache data for tokens associated with an active computation may be stored in the HBM 104a for access by the GPU 102a and KV cache data for tokens associated with one or more upcoming computations may be stored in the CPU-side memory device 104b, 104c, 104d. In some embodiments, the KV cache data for one or more tokens associated with an upcoming computation may be split into one or more portions and distributed across the CPU-side memory devices 104b, 104c, 104d. In some embodiments, the layer weights and KV cache are initially stored on a solid-state drive and then loaded to the CPU/GPU side memory when utilized.

In some embodiments, computations such as self-attention computations are memory-bound. By storing some of the data used for the computations in the memory expansion module 308, bandwidth for retrieving data used in the computations may be increased, helping reduce overall latency of the computations. In the example, of FIG. 3, the bandwidth may be increased by 26 GB/s due to access of the data from the memory expansion module 308 over link 106b.

### I. Batching Prefill and Decoding Sequences

Fig. 4 depicts a conceptual diagram of a technique for hybrid batching of prefilling and decoding sequences for increasing throughput, according to one or more embodiments. In some embodiments, the batching module 212 identifies a number of hybrid batches to generate for being processed (e.g., concurrently) in a processing cycle. The batching module 212 may select decoding and prefilling tokens based on the identified number of hybrid batches. In some embodiments, the number of hybrid batches is set based on a configuration parameter of the LLM 200. In some embodiments, the size (e.g., the number of tokens) of the hybrid batches may also be set based on a configuration parameter of the LLM 200. In some embodiments, the number and size of hybrid batches determine the combination of decoding and prefilling tokens within the hybrid batch.

In the example of Fig. 4, the batching module 212 generates four batches to be processed (e.g., concurrently) in a processing cycle, with eight requests per hybrid batch. For example, the decoding tokens of a first set of requests 410 may be batched together with the prefilling tokens of a second set of requests 402 to form a first hybrid batch 418. Due to the sequential dependency of decoding tokens on prefilling tokens of the same request, the identification of the prefilling tokens to include in the first hybrid batch 418 may be based on identification of the decoding token of the last request of the last (fourth) hybrid batch. In the example of FIG. 4, the last decoding token is for request number 16, causing the first prefilling token for the first hybrid batch 418 to be the prefilling token for request number 17, however, the embodiments are not limited thereto. In some embodiments, the prefilling tokens need not sequentially follow the last decoding token and instead be from a later-received request (e.g., request 20). In some embodiments, one or more hybrid batches 418-424 may be formed and processed by the LLM 200 concurrently or at least partially concurrently.

In the example of Fig. 4, the decoding tokens of the first set of requests 410 (e.g., requests 1-4) includes a decoding token of request 1, a decoding token of request 2, a decoding token of request 3, and a decoding token of request 4. The identified decoding tokens may be batched together with the prefilling tokens of the second set of requests 402 (e.g., request 17-20) to form the first hybrid batch 418.

In the example of FIG. 4, the second set of requests 402 includes the prefilling tokens of request 17, the prefilling token of request 18, the prefilling token of request 19, and the prefill token of request 20. In some embodiments, requests 17-20 are received by the LLM 200 after receipt of requests 1-4.

The decoding tokens of a third set of requests 412 (requests 5-8) may be batched together with the prefilling tokens of fourth set of requests 404 (requests 21-24) to form a second hybrid batch 420. In some embodiments, the second set of requests 402 (requests 17-20) are received after the third set of requests 412 (requests 5-8).

The decoding tokens of a fifth set of requests 414 (requests 9-12) (including the decoding tokens of request 9, the decoding tokens of request 10, the decoding tokens of request 11, and the decoding requests of request 12) may be batched together with the prefilling tokens of a sixth set of requests 406 (requests 25-28) (including the prefilling tokens of request 25, the prefilling tokens of request 26, the prefilling tokens of request 27, and the prefill requests of request 28) to form a third hybrid batch 422. In some embodiments, requests 25-28 are received after requests 9-12.

The decoding tokens of a seventh set of requests 416 (requests 13-16) (including the decoding tokens of request 13, the decoding tokens of request 14, the decoding tokens of request 15, and the decoding requests of request 16) may be batched together with the prefilling tokens of an eighth set of requests 408 (requests 29-32) (including the prefilling tokens of request 29, the prefilling tokens of request 30, the prefilling tokens of request 31, and the prefill requests of request 32) to form a fourth hybrid batch 424. In some embodiments, requests 17-20 are received after requests 1-4.

In the example of Fig. 4, four hybrid batches (e.g., hybrid batches 418, 420, 422, and 424) may be processed concurrently as a group 426 of batches, such as by utilizing parallel processing capabilities of the one or more processors 102 (e.g., the GPU 102a). The number of hybrid batches in the group 426 may be more or fewer than four.

The example of FIG. 4 depicts the decoding tokens of four requests and the prefilling tokens of four requests being batched into a hybrid batch. In some embodiments, a hybrid batch includes decoding tokens of more or fewer than four as determined, for example, the configuration parameter of the LLM 200.

In addition, the example of FIG. 4 further depicts the requests associated with the prefilling tokens as all being received after the requests associated with the decoding tokens in the group. In some embodiments, some requests associated with the prefilling tokens may be received before, after, or concurrently with some requests associated with the decoding tokens in the group. In the example of Fig. 4, decoding tokens in the group 426 of hybrid batches are respectively associated with requests 1-16 and the prefilling tokens are respectively associated with requests 17-32. In some embodiments, the requests associated with the prefilling tokens in a group 426 of hybrid batches and the requests associated with the decoding tokens may not be a continuous range of requests (e.g., 1-32). For example, the decoding tokens may be associated with requests 10-20, and the prefilling tokens may be associated with requests 30-40.

In some embodiments, a hybrid batch (e.g., 418) is associated with a KV cache. The KV cache for a hybrid batch may be updated as the hybrid batch undergoes the computations for a layer of the machine learning model. Fig. 5 depicts a conceptual diagram of how KV cache data associated with the group 426 of hybrid batches are utilized by one or more layers of a machine learning model (e.g., self-attention and FFN layers of a transformer layer 202a of the LLM 200). Dashed lines represent flow of KV cache data from layer to layer. Solid lines represent the execution path 502 of computations associated with the layers. For example, at computation 506a, the computations associated with a first layer 514 are performed on the first hybrid batch 418, and KV cache 504a for the first hybrid batch 418 is transformed and updated based on the computation 506a. The KV cache 504a for the first hybrid batch 418 is also utilized and updated by the computation 506b associated with the second layer 516, the computation 506c associated with the third layer 518, and the computation 506d associated with the fourth layer 520. The KV cache 504b, 504c, 504d for the second batch 420, third batch 422, and fourth batch 424 may be similarly utilized and updated by the computations associated with the first layer 514, second layer 516, third layer 518, and fourth layer 520. In some embodiments, computations (e.g., computations 506a, 506b, 506c, and 506d) performed on a hybrid batch (e.g., first hybrid batch 418) utilize the KV cache (e.g., KV cache 504a) for that hybrid batch (e.g., first hybrid batch 418) and are independent of the KV cache of other hybrid batches (e.g., hybrid batches 420, 422, 424).

In some embodiments, the first layer 514 is a first sub-layer of a self-attention layer of the LLM 200, the second layer 516 is a second sub-layer of the self-attention layer, the third layer is a third sub-layer of the self-attention layer, and the fourth layer is an FFN layer of the LLM 200.

Fig. 6 depicts a flow diagram of a process for hybrid batching of tokens for increasing throughput, according to one or more embodiments. The process 600 starts, and at action 602, the batching module 212 receives a first decoding sequence associated with a first request received by a machine learning model. At action 604, the batching module 212 receives a second decoding sequence associated with a second request received by the machine learning model.

At action 606, the batching module 212 receives a third prefilling sequence associated with a third request received by the machine learning model. At action 608, the batching module 212 receives a fourth prefilling sequence associated with a fourth request received by the machine learning model. In some embodiments, the first request and the second request are received by the machine learning model before the third request and fourth request.

At action 610, the batching module 212 combines the third prefilling sequence and the first decoding sequence into a first hybrid batch based on, for example, determination of the receipt time or sequence order of the third prefilling sequence and the first decoding sequence. In some embodiments, the tokens in the third prefilling sequence are identified using, for example, a prefill identifier. The tokens in the first decoding sequence may be identified by using, for example, a decoding identifier.

At action 612, the batching module 212 combines the fourth prefilling sequence and the second decoding sequence into a second hybrid batch based on, for example, determination of the receipt time or sequence order of the fourth prefilling sequence and the second decoding sequence. In some embodiments, the tokens in the fourth prefilling sequence are identified using, for example, a prefill identifier. The tokens in the second decoding sequence may be identified by using, for example, a decoding identifier.

At action 614, the one or more processors 102 may process the first hybrid batch and second hybrid batch according to a timing criterion (e.g., concurrently). In this regard, the prefill tokens in the first and second hybrid batches may be identified by the LLM 200 based on the prefill identifier and processed for generating corresponding decoding tokens. The decoding tokens in the first and second hybrid batches may be identified by the LLM 200 based on the decoding identifier and processed for being provided to a next layer of the LLM 200. In some embodiments, the processor may additionally include the forming of a third hybrid batch and a fourth hybrid batch (or more) which may also be processed according to the timing criterion (e.g., concurrently) with the first hybrid batch and the second hybrid batch.

Fig. 7 depicts a conceptual diagram of a technique for hybrid batching of prefilling and decoding sequences for improving latency (also referred to as a latency-prioritizing technique), according to one or more embodiments. In some embodiments, the batching module 212 is configured to select between the throughput-prioritizing hybrid batching mode and the latency-prioritizing hybrid batching mode based on one or more criteria. For example, the criterion may include type of application using the LLM 200, data traffic (e.g., size, rate), available bandwidth, and/or the like.

In the latency-prioritizing technique, the prefilling tokens for the first set of requests 402 (e.g., prefilling tokens of requests 17-20) may be split into one or more chunks to form respective blocks of prefilling tokens for hybrid batching with decoding tokens. In the example of Fig. 7, the prefilling tokens of request 17 may be split into four chunks, with a first chunk 702a including tokens 1-4 (e.g., token 1, token 2, token 3, and token 4), a second chunk 702b including tokens 5-8, a third chunk 702c including tokens 9-12, and a fourth chunk 702d including tokens 13-16. The prefilling tokens of requests 18, 19, and 20 may be similarly split into four chunks. The number of chunks may be determined, for example, based on a configuration parameter of the LLM 200.

In some embodiments, a first block of prefilling tokens 704 includes the first chunk (e.g., tokens 1-4) of prefilling tokens of request 17, a first chunk (e.g., tokens 1-4) of prefilling tokens of request 18, a first chunk (e.g., tokens 1-4) of prefilling tokens of request 19, and a first chunk (e.g., tokens 1-4) of prefilling tokens of request 20.

In some embodiments, a second block of prefilling tokens 706 includes a second chunk (e.g., tokens 5-8) of the prefilling tokens of request 17, a second chunk (e.g., tokens 5-8) of the prefilling tokens of request 18, a second chunk (e.g., tokens 5-8) of the prefilling tokens of request 19, and a second chunk (e.g., tokens 5-8) of the prefilling tokens of request 20.

In some embodiments, a third block of prefilling tokens 708 includes a third chunk (e.g., tokens 9-12) of the prefilling tokens of request 17, a third chunk (e.g., tokens 9-12) of the prefilling tokens of request 18, a third chunk (e.g., tokens 9-12) of the prefilling tokens of request 19, and a third chunk (e.g., tokens 9-12) of the prefilling tokens of request 20.

In some embodiments, a fourth block of prefilling tokens 710 includes a fourth chunk (e.g., tokens 13-16) of the prefilling tokens of request 17, a fourth chunk (e.g., tokens 13-16) of the prefilling tokens of request 18, a fourth chunk (e.g., tokens 13-16) of the prefilling tokens of request 19, and a fourth chunk (e.g., tokens 13-16) of the prefilling tokens of request 20.

In some embodiments, the first block of prefilling tokens 704 is batched together with a first block of decoding tokens (e.g., decoding tokens of the first set of requests 410 (requests 1-4)) to form a first hybrid batch 712. The second block of prefilling tokens 706 may be batched together with a second block of decoding tokens (e.g., decoding tokens of the second set of requests 412 (requests 5-8)) to form a second hybrid batch 714. The third block of prefilling tokens 708 may be batched together with a third block of decoding tokens (e.g., decoding tokens of the third set of requests 414 (requests 9-12)) to form a third hybrid batch 716. The fourth block of prefilling tokens 710 may be batched together with a fourth block of decoding tokens (e.g., decoding tokens of the fourth set of requests 416 (requests 13-16) to form a fourth hybrid batch 718.

In this example, the first hybrid batch 712, the second batch 714, the third hybrid batch 716, and the fourth hybrid batch 718 may be processed concurrently as a group 720 of batches, such as by utilizing parallel processing capabilities of the one or more processors 102 (e.g., the GPU 102a). The number of tokens in a chunk, the number of chunks in a block, the number of batches in a group, among others, are used as examples to illustrate one or more embodiments. Other embodiments may have different numbers of any of these elements.

Fig. 8 depicts a conceptual diagram of how KV cache data associated with the group 720 of hybrid batches are utilized by one or more layers of a machine learning model (e.g., self-attention and FFN layers of a transformer layer 202a of an LLM 200). Dashed lines represent flow of KV cache data from layer to layer. Solid lines represent the execution path 802 of computations associated with the layers. For example, at computation 806a, the computations associated with the first layer 814 are performed on the first hybrid batch 712, and KV cache 804a for the first hybrid batch 712 is transformed and updated based on the computation 806a. The KV cache 804a for the first hybrid batch 712 is also utilized and updated by the computation 806b associated with the second layer 816, the computation 806c associated with the third layer 818, and the computation 806d associated with the fourth layer 820. In the example of Fig. 7, the first batch 712 includes prefilling tokens 1-4 of requests 17-20, the second batch 714 includes prefilling tokens 5-8 of requests 17-20, the third batch 716 includes prefilling tokens 9-12 of requests 17-20, and the fourth batch 718 includes prefilling tokens 13-16 of requests 17-20.

In contrast to the hybrid batches of Fig. 4 in which the hybrid batches do not include tokens from the same requests, the hybrid batches of Fig. 7 include tokens from the same requests. In this regard, the computation 808b for the second batch 714 (prefilling tokens 5-8) also utilize the KV cache 804a for the first batch 712 in addition to the KV cache 804b of the second batch 712, as the second layer 816 computations 808b of prefilling tokens 5-8 have dependency on the results (KV cache 804a) of the computations 806a performed on tokens 1-4 in the first layer 814.

Similarly, the computation 808c for the third batch 716 (prefilling tokens 9-12) also utilize the KV cache 804a for the first batch 712 and the KV cache 804b for the second batch 714, in addition to the KV cache 804c of the third batch 716, as the second layer 816 computations 808c of prefilling tokens 9-12 have dependency on the results (KV cache 804a) of the computations 806a performed on tokens 1-4 in the first layer 814 and the results (KV cache 804b) of the computations 808b performed on tokens 5-8 in the first layer 814.

Similarly, the computation 808c for the fourth batch 716 (prefilling tokens 13-16) also utilize the KV cache 804a for the first batch 712, the KV cache 804b for the second batch 714, the KV cache 804c of the third batch 716, in addition to the KV cache 808d for the fourth batch 718, as the second layer 816 computations 808d of prefilling tokens 13-16 have dependency on the results (KV cache 804a) of the computations 806a performed on tokens 1-4 in the first layer 814, the results (KV cache 804b) of the computations 808b performed on tokens 5-8 in the first layer 814, and the results (KV cache 804bc) of the computations 808c performed on tokens 5-8 in the first layer 814. In the latency-optimizing technique depicted via Fig. 7 and 8, the KV cache of the hybrid batches (e.g., 712, 714, 716, 718) may be shared by the different computations without the need of the KC cache data being retrieved from memory (e.g., DRAM) for each of the computations. In this regard, the latency may be reduced.

Fig. 9 depicts a flow diagram of a process 900 for hybrid batching of tokens for decreasing latency, according to one or more embodiments. The process 900 starts, and at action 902, a machine learning model (e.g., the LLM 200) receives a first decoding sequence of one or more tokens associated with a first request. At action 904, the machine learning model receives a second decoding sequence of one or more tokens associated with a second request. At action 906, machine learning model receives a prefilling sequence associated with a third request. In some embodiments, the third request may be received after the first and second requests.

At action 908, the batching module 212 splits the prefilling sequence into one or more chunks based on an identified configuration parameter. For example, the prefiling sequence may be split into a first chunk having a subset of the tokens of the prefilling sequence (e.g., tokens 1-4) and a second chunk having a subset of the tokens of the prefilling sequence (e.g., tokens 5-8). At action 910, the batching module 212 combines the first chunk of the prefilling sequence and the first decoding sequence to form a first hybrid batch of tokens. In some embodiments, the first chunk of the prefilling sequence is identified as containing prefill tokens using, for example, a prefill identifier. The decoding tokens in the first decoding sequence may be identified using, for example, a decoding identifier.

At action 912, the batching module 212 combines the second chunk of the prefilling sequence and the second decoding sequence to form a second hybrid batch of tokens. At action 914, the one or more processors 102 process the first hybrid batch and the second hybrid batch (e.g., concurrently). In this regard, the prefill tokens in the first and second hybrid batches may be identified by the LLM 200 based on the prefill identifier and processed for generating corresponding decoding tokens. The decoding tokens in the first and second hybrid batches may be identified by the LLM 200 based on the decoding identifier and processed for being provided to a next layer of the LLM 200.

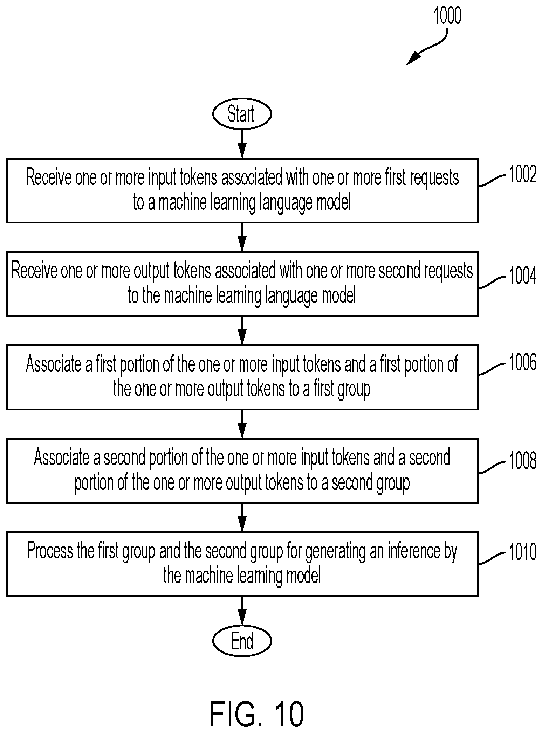

Fig. 10 depicts a flow diagram of a general process 1000 for hybrid batching of tokens for a machine learning model, according to one or more embodiments. The process 1000 starts, and in action 702, the machine learning model (e.g., LLM 200) receives one or more input (e.g., prefilling) tokens associated with one or more first requests to the machine learning model. The one or more first requests may include a first group of requests such as requests 17-20, as depicted in Figs. 4 and 7.

At action 1004, the machine learning model (e.g., LLM 200) receives one or more output (e.g., decoding) tokens associated with one or more second requests to the machine learning model. For example, the one or more second requests may be a second group of requests such as requests 1-4, as depicted in Figs. 4 and 5. In some embodiments, the first requests and/or the second requests may be associated with a first and/or second prompt (e.g., query) submitted to the machine learning model. In some embodiments, the one or more input tokens are generated based on processing the one or more first input queries, and the output tokens are generated based on executing a neural network (e.g., one or more transformer layers 202) to make a prediction based on the one or more second input queries.

At action 1006, the batching module 212 associates a first portion of the one or more input tokens and a first portion of the one or more output tokens to a first group (e.g., first hybrid batch) of input and output tokens. The size of the portions may be based on a configuration parameter of the LLM 200.

At action 1008, the batching module 212 associates a second portion of the one or more input tokens and a second portion of the one or more output tokens to a second group (e.g., second hybrid batch) of input and output tokens. The number of hybrid batches that are to be generated may depend, for example, on a configuration parameter of the LLM 200.

In some embodiments, the one or more input tokens may include at a set of tokens associated with a first request of the one or more first requests and a set of tokens associated with a second request of the one or more first requests, and the first portion of the one or more input tokens includes the set of tokens associated with the first request. In some embodiments, the first portion of the one or more input tokens further includes the set of tokens associated with the second request.

In some embodiments, the one or more input tokens includes a first set of tokens associated with a first request of the one or more first requests and a second set of tokens associated with a second request of the one or more first requests, and the first portion of the one or more input tokens includes a first portion of the first set of tokens and the second portion of the one or more input tokens includes a second portion of the first set of tokens. In some embodiments, the first portion of the one or more input tokens includes a first portion of the second set of tokens and the second portion of the one or more input tokens includes a second portion of the second set of tokens.

In some embodiments, the first portion of the one or more output tokens includes a first set of tokens associated with a first request of the one or more second requests, and the second portion of the one or more output tokens includes a second set of tokens associated with a second request of the one or more second requests.

At action 1010, the processor 102 processes the first group and the second group for generating an inference by the machine learning model. In some embodiments, the first group and second group are processed concurrently by the one or more processors 102 (e.g., the GPU 102a).

### II. Balancing Computation and Memory Accesses

Fig. 11 depicts a conceptual diagram of unbalanced computation and memory latency for self-attention and FFN layers of the LLM 200. Fig. 12 depicts a conceptual diagram of balanced computation and memory latency for the self-attention and FFN layers, according to one or more embodiments of the present disclosure.

Referring to Fig. 11, one or more operation blocks 1102a-c are performed by the one or more processors 102 for a first layer 1112 of a machine learning model such as the LLM 200, and one or more operation blocks 1104a-c are performed by the one or more processors 102 for a second layer 1112 of the machine learning model such as the LLM 200. An operation block (e.g., operation block 102a) may include at least a computation task (e.g., computation task 1120a). Some operation blocks also include one or more memory access tasks (e.g., memory access task 1102a for loading KV cache) that are performed partially concurrently with the computation task.

In the example of Fig. 11, the KV cache for a batch of tokens is loaded prior to a computation utilizing the KV cache, such as in memory access task 1102a. In the example of Fig. 11, a KV cache that was previously loaded and utilized for a computation may be stored, such as at memory task 1124b. In the example of Fig. 11, layer weight data for a layer (e.g., the second layer 1114) is loaded prior to a computation associated with the layer, such as at memory task 1126a. Memory access tasks that are scheduled in this manner may result in operation blocks 1102a-c, 1104a-c that have different types and amounts of memory access tasks that are performed with the computations, resulting in some operation blocks having longer memory latency than computation latency, such as in operation blocks 1102b, 1102c, and 1104c, and some operation blocks having longer computation latency than memory latency, such as operation blocks 1102a, 1104, and 1104b which do not have any memory access tasks. These differentials between computation latency and memory latency increase the overall latency of the processing of the operation blocks. It may be desirable to balance the memory access tasks more evenly across the operation blocks to help decrease the overall latency of the LLM 200.

Fig. 12 depicts a flow of operation blocks performed by the one or more processors 102 for a machine learning model such as the LLM 200. An operation block (e.g., operation block 1202a) may include one or more computation tasks and one or more memory access tasks that are performed at least partially concurrently with the computation tasks such that the latency of the memory access tasks is at least partially concurrent with (e.g., hidden by) the latency of the computation task. The computation tasks may be, for example, mathematical computations based on retrieved weights and KV caches, and the data access tasks may be, for example, storing and retrieval of weights and KV caches from the one or more memory devices 104. In the example of FIG. 12, four operation groupings 1202, 1204, 1206, 1208 are shown. For example, a first operation grouping 1202 includes a first operation block 1202a, a second operation block 1202b, and a third operation block 1202c.

In some embodiments, an operation block (e.g., the first operation block 1202a) is associated with a batch of tokens and a layer of the machine learning model. In some embodiments, the batch of tokens may be a hybrid batch of tokens that includes both prefilling tokens and decoding tokens, such as the hybrid batch of tokens described with respect to Figs. 4 and 5.

In the diagram of Fig. 12, operation blocks in the same column (e.g., operation blocks 1202a-c and operation blocks 1206a-c) are associated with the same layer (e.g., layer 1 1212), and operation blocks in the same row (e.g., operation blocks 1202a and 1204a) are associated with the same batch of tokens (e.g., batch 1). The diagram of Fig. 12 illustrates a batch dimension 1236 which differentiates between batches, and a layer dimension 1234 which differentiates between layers.

For example, operation groupings 1202 and 1206 are associated with a first layer 1212 of the machine learning model, and operation groupings 1204 and 1208 are associated with a second layer of the machine learning model. The first layer 1212 may be, for example, a self-attention layer of the transformer layer 202a or one of the other neural network layers 202b-n, or any sub-layers of such neural network layers 202a-n. The second layer 1214 may be, for example, an FNN layer of the transformer layer 202a or one of the other neural network layers 202b-n, or any sub-layers of such neural network layers 202a-n. In some embodiments, the self-attention layer is further split into one or more sub-layers, and the first and second layers are two of these sub-layers. Operation blocks 1202a and 1204a may both be associated with a first batch of tokens, referred to as batch 1 (616). Operation blocks 1202b and 1204b are both associated with a second batch of tokens, referred to as batch 2 (618).

Path 1210 represents an order in which the operation blocks are performed. In some embodiments, the first operation grouping 1202, which are associated with a first group of batches (batches 1-3) and the first layer 1212, are performed (e.g., performed first). In some embodiments, the second operation grouping 1204, which are associated with the first group of batches (batches 1-3) and the second layer 1214, are performed (e.g., performed after the first operation grouping 1202). In some embodiments, the third operation grouping 1206, which is associated with a second group of batches (batches 4-6) and the first layer 1212, are performed (e.g., performed after the second operation grouping 1202). In some embodiments, the fourth operation grouping 1208, which is associated with the second group of batches (batches 4-6) and the second layer 1214, are performed (e.g., performed after the third operation grouping blocks 1202). In some embodiments, within an operation grouping blocks (e.g., 1202), the operation blocks (e.g., 1202a, 1202b, 1202c) are performed sequentially, such as illustrated by path 1210.

In some embodiments, layer weights associated with a layer may be split into one or more portions across the batch dimension 1236 and pre-loaded before performing the computations that utilize the layer weights. For example, the layer weights 1224b for the second layer 1214, which are to be used for the second operation grouping blocks 1204, may be split into three portions 1224a, 1224b, 1224c and loaded or retrieved respectively from the corresponding memory device 104 during computations 1220a, 1220b, 1220c. The splitting may occur before the layer weights 1224 are utilized during the second operation grouping blocks 1204. The layer weights may be split into any number of portions up to the number of batches in an operation grouping performed prior to the operation grouping utilizing the layer weights. In some embodiments, the layer weights are split into even portions across the batch dimension 1236.

In some embodiments, the KV cache data associated with a batch may be split into one or more portions across the layer dimension 1234 and preloaded before calculations for that batch are performed and the KV cache is used. For example, loading of the KV cache data 1226 to be used during computations 1230a for batch 4 (628) may be split into two portions 1226a, 1226b and pre-loaded by the processor 102 prior to the computations 1230a for batch 4 (e.g., performed after the first operation grouping 1202). The KV cache data for a batch may be split into any number of portions up to preset number of layers of the LLM 200. In some embodiments, the KV cache is split into even portions across the layer dimension 1224. In some embodiments, the KV cache is split into portions of various sizes based on one or more other factors such as the length of the computation with which a portion is paired to more optimally hide the latency of the memory access.

The storing of KV data may also be split into one or more portions to be performed concurrently with one or more computations. For example, the KV values resulting from the computation 1220a associated with the first batch may be split into two portions 1238a, 1238b and stored after the computations are performed, such as during computations 1230a and 1240a. The present technique of splitting memory tasks into portions and distributing the portions across computation tasks may help increase the amount of concurrency between computation latency and memory access latency, which may help decrease the overall amount of latency required for an operation block.

In some embodiments, the layer weights are split into portions of various sizes based on one or more other factors such as the length of the computation with which a portion is paired to more optimally hide the latency of the memory access. In some embodiments, the balancing module 212 is configured to build an operation block (e.g., operation block 1202a) based on a predicted or estimated length of a corresponding computation (e.g., computation 1220a) and latency of one or more memory accesses associated with the same or other computations of the LLM 200. The one or more memory accesses may be for retrieving layer weights, retrieving KV cache data, storing KV cache data, and the like.

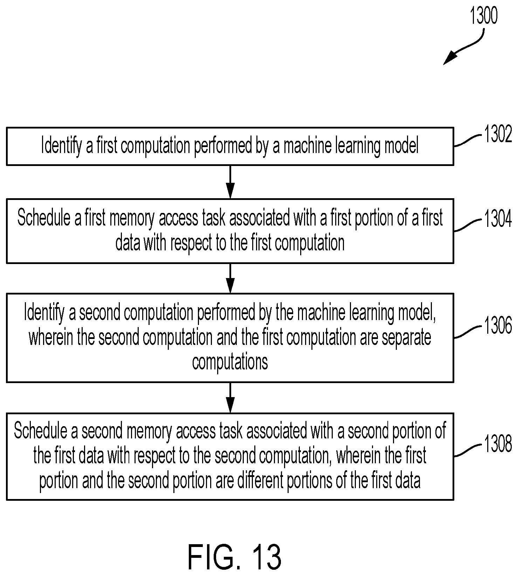

Fig. 13 depicts a flow diagram of a process for balancing computation and memory latency for a machine learning model, according to one or more embodiments. The process 1300 starts, and at action 1302, the processor 102 (e.g., the balancing module 212) identifies a first computation performed by a machine learning model. In some embodiments, the first computation is associated with a first layer of a machine learning model. In some embodiments, the machine learning model includes the LLM 200. In some embodiments, the first data includes layer weight data associated with the first layer of the machine learning model. In some embodiments, the first layer is a self-attention layer of the attention module 208 of the LLM 200. In some embodiments, the first data includes KV cache data associated with a first batch of tokens to be processed by the machine learning model.

At action 1304, the processor schedules a first memory access task associated with a first portion of a first data with respect to the first computation. The first data may be, for example layer weights or KV cache data. In some embodiments, the first portion of the first data may be loaded from the second memory device 104b, third memory device 104c, or the expanded memory device 104d, into the HBM 104a, for access by the GPU 102a. In some embodiments, the scheduling of the first memory access task computation with respect to the first computation satisfies a first criterion such as a timing criterion. For example, the first portion of the first data is scheduled to be accessed at least partially during the first computation. The latency of the first computation may be longer or shorter than the latency of accessing the first portion of the first data.

At action 1306, the processor identifies a second computation performed by the machine learning model. In some embodiments, the second computation and the first computation are separate computations. The first and second computations may include the same or different mathematical computations, such as, for example, mathematical computations performed by the attention layer or the FFN layer of the LLM 200.

At action 1308, the processor schedules a second memory access task associated with a second portion of the first data with respect to the second computation. In some embodiments, the first portion and the second portion are different portions of the first data (e.g., different portions of the layer weights or different portions of the KV cache). In some embodiments, the second portion of the first data may be loaded into the HBM 104a for access by the GPU 102a

In some embodiments, the performing of the second computation and the accessing of the second portion of the first data satisfy a second criterion. In some embodiments, the second criterion is a timing criterion. For example, the second portion of the first data is accessed at least partially during the first computation. The latency of the second computation may be longer or shorter than the latency of accessing the first portion of the second data. In some embodiments, the processor 102 performs the first computation and the first memory access task according to a schedule, and performs the second computation and the second memory access task according to the schedule. In some embodiments, according to the schedule, the first computation and first memory access task are performed at least partially concurrently, the second computation and second memory access task are performed at least partially concurrently, and the first and second computations are performed sequentially.

In some embodiments, the second computation is associated with a second neural network layer of a machine learning model, such as an FFN layer in the expert module 210 of the LLM 200. In some embodiments, the second computation is associated with a second batch of tokens. In some embodiments, the first computation includes self-attention layer computations performed on the first batch of tokens, and the second computation includes self-attention layer computations performed on the second batch of tokens. In some embodiments, the first computation includes self-attention layer computations performed on the first batch of tokens, and the second computation includes FFN layer computations performed on the first batch of tokens. The first portion may be loaded into the HBM 104a during the first computation and the second portion may be loaded into the HBM 104b during the second computation. In some embodiments, the second computation occurs at least partially after the first computation.

In some embodiments, the first data includes layer weight data associated with a layer of the machine learning model and the layer weight data is split into the first portion and the second portion. In some embodiments, the first data includes KV cache data associated with a batch of tokens. In some embodiments, one or more computations of the machine learning model, including the first computation and the second computation, are associated with K number of groups of tokens. In this regard, the processor splits the layer weights data into K portions and schedules the K portions of the key-value data with respect to the K groups of tokens. In some embodiments, one or more computations of the machine learning model, including the first computation and the second computation, are associated with M number of layers. In this regard, the processor splits the key-value data into M portions and schedules memory access tasks associated with the M portions with respect to the M layers.

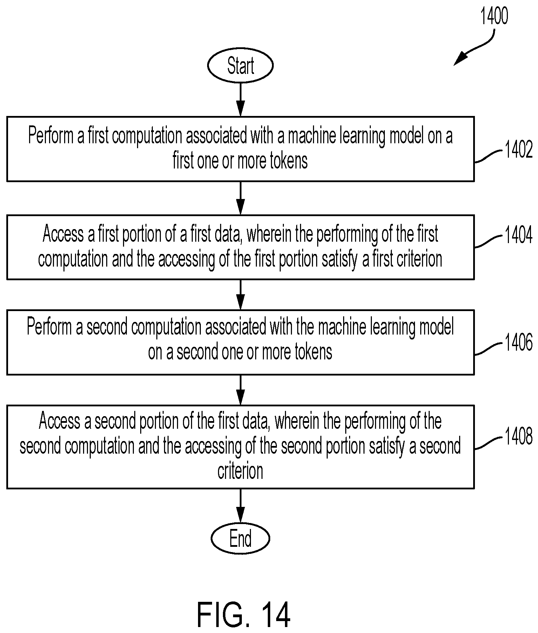

Fig. 14 depicts a flow diagram of a process for balancing computation and memory latency associated with distributing memory access of layer weights across the batch dimension, according to one or more embodiments. The process 1400 starts, and at action 1402, a processor (e.g., the one or more processors 102) performs a first computation associated with a machine learning model (e.g., the LLM 200) on a first one or more tokens (e.g., a first batch of tokens). In some embodiments, the first one or more tokens may include a hybrid batch of tokens including at least one prefilling token and at least one decoding token.

At action 1404, the processor accesses (e.g., loads or stores) a first portion of a first data. In some embodiments, the performing of the first computation and the accessing of the first portion of the first data satisfy a first criterion. In some embodiments, the first criterion includes a timing criterion such as concurrency. For example, the first portion of the first data may be accessed at least partially during or concurrently with the first computation.

At action 1406, the processor performs a second computation associated with the machine learning model on a second one or more tokens (e.g., second batch of tokens). In some embodiments, the second computation occurs at least partially after the first computation.

At action 1408, the memory accesses a second portion of the first data. In some embodiments, the performing of the second computation and the accessing of the second portion of the first data satisfy a second criterion such as a timing criterion. For example, the second portion of the first data may be accessed at least partially during the second computation. The latency of the second computation may be longer or shorter than the latency of accessing the first portion of the second data.

In some embodiments, the first data includes layer weight data for a layer of the machine learning model, such as a self-attention layer of the attention module 208 or an FFN layer of the expert module 210 of the LLM 200. In some embodiments, the first and second computations are associated with the same layer of the machine learning model and performed on different batches of tokens (e.g., first and second batches respectively), and the first data includes layer weight data for a different layer. For example, the first and second computations may be associated with the self-attention layer of the LLM 200, and the first data includes the layer weight data for the FFN layer of the LLM. In another example, the first and second computations may be associated with the FFN layer of the LLM 200, and the first data includes the layer weight data for the self-attention layer of the LLM.

In some embodiments, the loading of the layer weight data is split or grouped into the first and second portions and distributed across the first and second computations (e.g., the first portion of the loading is performed at least partially concurrently with first computation, and the second portion of the loading is performed at least partially concurrently with the second computations). In some embodiments, layer weight data may be split into additional portions (e.g., third portion, fourth portion, etc.) and distributed across additional computations (e.g., third computation, fourth computation, etc.) of additional batches of tokens (e.g., third batch, fourth batch, etc.).

In some embodiments, a first portion of a second data is also loaded during the first computation of the first batch of tokens. The second data may include KV cache data associated with a third batch of tokens (e.g., a batch other than the first and second batch). One or more additional portions of the second data may be loaded during one or more other computations that occur before or after the first computation.

In some embodiments, a first portion of a third data is loaded during the second computation of the second batch of tokens. The third data may include KV cache data associated with a fourth batch of tokens (e.g., a batch other than the first, second, and third batch). One or more additional portions of the third data may be loaded during one or more other computations that occur before or after the second computation.

In some embodiments, a first portion of a first previously loaded data is stored during the first computation of the first batch of tokens. The first previously loaded data may include KV cache data associated with a batch of tokens that were processed prior to the first computation. One or more additional portions of the first previously loaded data may be stored during one or more other computations that occur before or after the first computation.

In some embodiments, a first portion of a second previously loaded data is stored during the second computation of the second batch of tokens. The second previously loaded data may include KV cache data associated with a batch of tokens that were processed prior to the second computation. One or more additional portions of the second previously loaded data may be stored during one or more other computations that occur before or after the second computation.

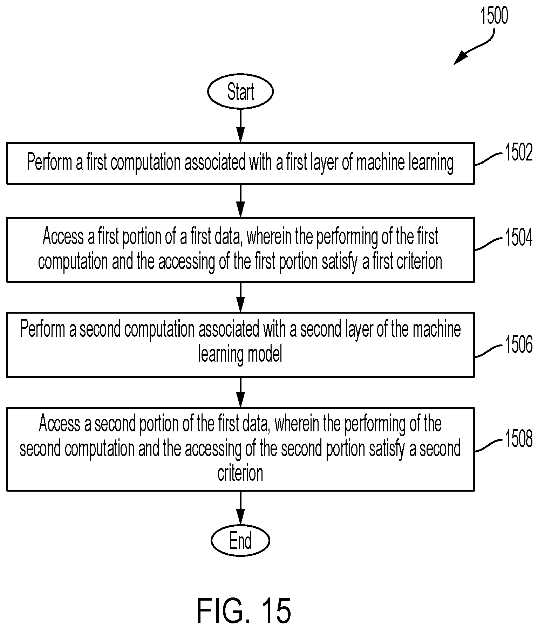

Fig. 15 depicts a flow diagram of a process for balancing computation and memory latency associated with distributing memory access of KV cache data across the layer dimension, according to one or more embodiments.

The process 1500 starts, and at action 1502, a processor (e.g., the one or more processors 102) performs a first computation associated with a first layer of a machine learning model (e.g., the LLM 200). In some embodiments, the first layer is a self-attention layer of the LLM 200. In some embodiments, the first layer is an FFN layer of the LLM 200.

At action 1504, the processor accesses (e.g., loads or stores) a first portion of a first data. In some embodiments, the performing of the first computation and the accessing of the first portion of the first data satisfy a first criterion such as a timing criterion. For example, the first portion of the first data is accessed at least partially during (e.g., concurrently with) the first computation.

At action 1506, the processor performs a second computation associated with a second layer of the machine learning model. For example, the first layer may be a self-attention layer of the LLM 200 and the second layer may be an FFN layer of the LLM 200, or the first layer may be the FFN layer of the LLM and the second layer may be the self-attention layer of the LLM.

At action 1508, the memory accesses a second portion of the first data. In some embodiments, the performing of the second computation and the accessing of the second portion of the first data satisfy a second criterion such as a timing criterion. For example, the second portion of the first data is accessed at least partially during or concurrently with the second computation. In some embodiments, the first data includes KV cache data associated with a first batch of tokens to be processed by the machine learning model.

In some embodiments, the KV cache data is split into the first and second portions and distributed across the first and second computations. In some embodiments, layer weight data may be split into additional portions (e.g., third portion, fourth portion, etc.) and distributed across additional computations (e.g., third computation, fourth computation, etc.) of additional layers (e.g., third layer, fourth layer, etc.) of the machine learning model. For example, in some embodiments, the self-attention layer may be treated as multiple sub-layers (e.g., three layers) and the KV cache data is split into four portions and distributed across four computations associated respectively with four different layers (e.g., three self-attention sub-layers and the FFN layer).

In some embodiments, a first portion of a second data is also loaded during the first computation associated with the first layer. The second data may include layer weights data associated with a third layer (e.g., a layer other than the first and second layer). One or more additional portions of the second data may be loaded during one or more other computations that occur before or after the first computation.

In some embodiments, a first portion of a previously loaded data is stored during the first computation. In some embodiments, a second portion of the previously loaded data is stored during the second computation. The first previously loaded data may include KV cache data associated with a batch of tokens that were processed prior to the first computation. One or more additional portions of the first previously loaded data may be stored during one or more other computations that occur before or after the first computation.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for processing requests for a machine learning model have been specifically described and illustrated herein, many modifications and variations will be apparent to those skilled in the art. Accordingly, it is to be understood that systems and methods for processing requests for a machine learning model constructed according to principles of this disclosure may be embodied other than as specifically described herein. The disclosure is also defined in the following claims, and equivalents thereof.

The systems and methods for processing requests to a machine learning module may contain one or more combination of features set forth in the below statements.

Statement 1: A method comprising: receiving one or more input tokens associated with a one or more first requests to a machine learning model; receiving one or more output tokens associated with one or more second requests to the machine learning model; associating a first portion of the one or more input tokens and a first portion of the one or more output tokens with a first group; associating a second portion of the one or more input tokens and a second portion of the one or more output tokens with a second group; and processing, by the machine learning model, the first group and the second group for generating an inference.

Statement 2: The method of Statement 1, wherein the one or more input tokens comprise a set of tokens associated with a first request of the one or more first requests and a set of tokens associated with a second request of the one or more first requests, and wherein the first portion of the one or more input tokens comprises the set of tokens associated with the first request.

Statement 3: The method of Statement 2, wherein the first portion of the one or more input tokens further comprises the set of tokens associated with the second request.

Statement 4: The method of one of Statements 1-3, wherein the one or more input tokens comprises a first set of tokens associated with a first request of the one or more first requests and a second set of tokens associated with a second request of the one or more first requests, and wherein the first portion of the one or more input tokens includes a first portion of the first set of tokens and the second portion of the one or more input tokens includes a second portion of the first set of tokens.

Statement 5: The method of Statement 4, wherein the first portion of the one or more input tokens includes a first portion of the second set of tokens and the second portion of the one or more input tokens includes a second portion of the second set of tokens.

Statement 6: The method of one of Statements 1-5, wherein the first portion of the one or more output tokens includes a first set of tokens associated with a first request of the one or more second requests, and the second portion of the one or more output tokens includes a second set of tokens associated with a second request of the one or more second requests.

Statement 7: The method of one of Statements 1-6, wherein the one or more first requests include one or more first input queries and the one or more second requests include one or more second input queries.

Statement 8: The method of Statement 7, wherein the one or more input tokens are generated based on processing the one or more first input queries, and the output tokens are generated based on executing a neural network to make a prediction based on the one or more second input queries.

Statement 9: A method comprising: identifying a first computation performed by a machine learning model; scheduling a first memory access task associated with a first portion of a first data with respect to the first computation; identifying a second computation performed by the machine learning model, wherein the second computation and the first computation are separate computations; and scheduling a second memory access task associated with a second portion of the first data with respect to the second computation, wherein the first portion and the second portion are different portions of the first data.

Statement 10: The method of Statement 9, further comprising: performing the first computation and the first memory access task according to a schedule; and performing the second computation and the second memory access task according to the schedule.

Statement 11: The method of one of Statements 9 or 10, wherein first computation is associated with a first group of tokens and a first layer of the machine learning model, wherein the second computation is associated with a second group of tokens and the first layer.

Statement 12: The method of Statement 11, wherein the first data includes layer weight data associated with a second layer of the machine learning model.

Statement 13: The method of Statement 12, wherein one or more computations of the machine learning model, including the first computation and the second computation, are associated with K number of groups of tokens, the method comprising: separating the layer weights data into K portions; and scheduling the K portions of the layer weights data with respect to the K groups of tokens.

Statement 14: The method of one of Statements 9-13, wherein first computation is associated with a first group of tokens and a first layer of the machine learning model, wherein the second computation is associated with a second group of tokens and a second layer of the machine learning model.

Statement 15: The method of Statement 14, wherein the first data includes key-value data associated with a third group of tokens.

Statement 16: The method of Statement 15, wherein one or more computations of the machine learning model, including the first computation and the second computation, are associated with M number of layers of the machine learning model, the method comprising: separating the key-value data into M portions; and scheduling memory access tasks associated with the M portions with respect to the M layers.

Statement 17: The method of one of Statements 14-16, wherein the first layer and the second layer are layers of a transformer layer of a large language model.

Statement 18: The method of one of Statements 14-17, wherein the first layer is a self-attention layer of a large language model of the machine learning model, and the second layer is a feed forward neural-network layer of the large language model.

Statement 19: A system comprising: a processing circuit; and a memory storing instructions, which, based on being executed by the processing circuit, cause the processing circuit to perform: identifying a first computation performed by a machine learning model; scheduling a first memory access task associated with a first portion of a first data with respect to the first computation; identifying a second computation performed by the machine learning model, wherein the second computation and the first computation are separate computations; and scheduling a second memory access task associated with a second portion of the first data with respect to the second computation, wherein the first portion and the second portion are different portions of the first data.

Statement 20: The system of Statement 19, wherein the instructions, based on being executed by the processing circuit, further cause the processing circuit to perform: performing the first computation and the first memory access task according to a schedule; and performing the second computation and the second memory access task according to the schedule.

## Claims

1. A method comprising:
receiving one or more input tokens associated with a one or more first requests to a machine learning model;
receiving one or more output tokens associated with one or more second requests to the machine learning model;
associating a first portion of the one or more input tokens and a first portion of the one or more output tokens with a first group;
associating a second portion of the one or more input tokens and a second portion of the one or more output tokens with a second group; and
processing, by the machine learning model, the first group and the second group for generating an inference.

2. The method of claim 1, wherein the one or more input tokens comprise a set of tokens associated with a first request of the one or more first requests and a set of tokens associated with a second request of the one or more first requests, and wherein the first portion of the one or more input tokens comprises the set of tokens associated with the first request.

3. The method of claim 2, wherein the first portion of the one or more input tokens further comprises the set of tokens associated with the second request.

4. The method of claim 1, wherein the one or more input tokens comprises a first set of tokens associated with a first request of the one or more first requests and a second set of tokens associated with a second request of the one or more first requests, and wherein the first portion of the one or more input tokens includes a first portion of the first set of tokens and the second portion of the one or more input tokens includes a second portion of the first set of tokens.

5. The method of claim 4, wherein the first portion of the one or more input tokens includes a first portion of the second set of tokens and the second portion of the one or more input tokens includes a second portion of the second set of tokens.

6. The method of claim 1, wherein the first portion of the one or more output tokens includes a first set of tokens associated with a first request of the one or more second requests, and the second portion of the one or more output tokens includes a second set of tokens associated with a second request of the one or more second requests.

7. The method of any one of claims 1 to 6, wherein the one or more first requests include one or more first input queries and the one or more second requests include one or more second input queries.

8. The method of claim 7, wherein the one or more input tokens are generated based on processing the one or more first input queries, and the output tokens are generated based on executing a neural network to make a prediction based on the one or more second input queries.

9. A method comprising:
identifying a first computation performed by a machine learning model;
scheduling a first memory access task associated with a first portion of a first data with respect to the first computation;
identifying a second computation performed by the machine learning model, wherein the second computation and the first computation are separate computations; and
scheduling a second memory access task associated with a second portion of the first data with respect to the second computation, wherein the first portion and the second portion are different portions of the first data.

10. The method of claim 9, further comprising:
performing the first computation and the first memory access task according to a schedule; and
performing the second computation and the second memory access task according to the schedule.

11. The method of claim 9 or 10, wherein first computation is associated with a first group of tokens and a first layer of the machine learning model, wherein the second computation is associated with a second group of tokens and the first layer.

12. The method of claim 11, wherein the first data includes layer weight data associated with a second layer of the machine learning model.

13. The method of claim 12, wherein one or more computations of the machine learning model, including the first computation and the second computation, are associated with K number of groups of tokens, the method comprising:
separating the layer weights data into K portions; and
scheduling the K portions of the layer weights data with respect to the K groups of tokens.

14. The method of claim 9 or 10, wherein first computation is associated with a first group of tokens and a first layer of the machine learning model, wherein the second computation is associated with a second group of tokens and a second layer of the machine learning model.

15. The method of claim 14, wherein the first data includes key-value data associated with a third group of tokens.
